# EUROPÄISCHE PATENTSCHRIFT

(11) **EP 4 201 390 B1**
(45) Veröffentlichungstag und Bekanntmachung des Hinweises auf die Patenterteilung: **01.04.2026**
(21) Anmeldenummer: 21216624.3
(22) Anmeldetag: 21.12.2021
(51) Int. Cl.: A61J 3/07

(54) **KAPSELFÜLLMASCHINE ZUR BEFÜLLUNG ZWEITEILIGER KAPSELN UND VERFAHREN ZUR BEFÜLLUNG ZWEITEILIGER KAPSELN**
CAPSULE FILLING MACHINE FOR FILLING TWO-PART CAPSULES AND METHOD FOR FILLING TWO-PART CAPSULES
MACHINE À REMPLIR LES CAPSULES DESTINÉE AU REMPLISSAGE DES CAPSULES EN DEUX PARTIES ET PROCÉDÉ DE REMPLISSAGE DE CAPSULES EN DEUX PARTIES

(43) Veröffentlichungstag der Anmeldung: 28.06.2023
(73) Patentinhaber: Harro Höfliger Verpackungsmaschinen GmbH, 71573 Allmersbach im Tal (DE)
(72) Erfinder: Kleine-König, Benedict, 71573 Allmersbach im Tal (DE); Lux, Andreas, 71573 Allmersbach im Tal (DE)
(74) Vertreter: Zurhorst, Stefan

(56) Entgegenhaltungen:
- US-A- 5 750 938
- US-A1- 2008 127 609
- US-A1- 2008 256 906
- US-A1- 2014 311 104
- US-A1- 2019 029 922

## Beschreibung

Die Erfindung betrifft eine Kapselfüllmaschine zur Befüllung zweiteiliger Kapseln gemäß dem Oberbegriff des Anspruchs 1. Ferner betrifft die Erfindung ein Verfahren zur Befüllung zweiteiliger Kapseln.

Vorrangig im pharmazeutischen Bereich, aber auch im Bereich der Nahrungsergänzungsmittel werden Kapseln zur Verabreichung dosierter Mengen eines pulvrigen, granulatartigen oder flüssigen Präparates eingesetzt. Die Kapseln bestehen aus Hartgelatine oder dergleichen und lösen sich nach dem Verschlucken auf, in dessen Folge ihr Inhalt freigesetzt wird.

Bei sogenannten Steckkapseln erfolgt auf getakteten Kapselfüllmaschinen zunächst eine Zufuhr von Leerkapseln, welche aufrecht stehend in Kapselhaltern positioniert und dann geöffnet werden. Die Kapselunterteile werden in einem Segmentunterteil, die Kapseloberteile in einem Segmentoberteil gehalten. Die Segmentteile schwenken nach der Trennung der Kapseln auseinander, so dass die Kapselunterteile zur Befüllung freigegeben sind. Anschließend werden in einer oder mehreren Dosierstationen die nach oben offenen Kapselunterteile mit dem vorgesehenen Präparat in dosierter Menge befüllt. In einer Schließstation werden dann die Kapseloberteile wieder auf die gefüllten Kapselunterteile aufgesteckt. Die auf diese Weise entstandenen fertig befüllten Kapseln werden schließlich in einer Ausstoßstation aus ihren Kapselhaltern herausgenommen und dann der Weiterverarbeitung, insbesondere der Verpackung zugeführt.

Zur Einhaltung der hohen Qualitätsstandards, insbesondere im pharmazeutischen Bereich, wird die Füllmenge der Kapseln ermittelt und auf Richtigkeit geprüft. Derartige Kontrollen können stichprobenartig erfolgen. Oftmals sind auch sogenannte hundertprozentige In-Prozess-Kontrollen vorgesehen, d.h. es wird die Menge des Füllgutes einer jeden Kapsel ermittelt.

Ein hierzu bekanntes Verfahren ist die Massebestimmung des Füllgutes mittels eines kapazitiven Messsystems. Beim Befüllen der Kapseln fällt das Füllgut durch einen Messkanal des kapazitiven Messsystems hindurch bis in das Kapselunterteil. An dem Messkanal liegt ein elektrisches Messfeld an, auf welches das Füllgut wirkt und eine Änderung der Kapazität verursacht. Auf Basis dieser kapazitiven Änderung kann die Masse des Füllgutes während des Füllvorgangs ermittelt werden. Diese Messmethodik zeichnet sich durch ihre hohe Messgeschwindigkeit aus. Ein weiterer Vorteil besteht darin, dass unmittelbar die Masse des Füllgutes, nicht jedoch die der Kapsel gemessen wird. Somit handelt es sich bei der beschriebenen Messung um eine sogenannte Netto-Messung. Dadurch wird das Messergebnis durch die Kapselmasse nicht beeinflusst.

Eine solche Massebestimmung mittels eines kapazitiven Messsystems beim Füllvorgang zeigt US 2014 / 311 104 A1.

Mittels Kontrollmessungen konnte jedoch festgestellt werden, dass die Erfassung der Füllmenge nur unter begrenzter Genauigkeit ermittelt werden kann. Insbesondere bei kritischen Wirkstoffen kann eine höhere Genauigkeit gewünscht sein.

Der Erfindung liegt die Aufgabe zugrunde, eine Kapselfüllmaschine zur Befüllung von Kapseln bereitzustellen, die eine Bestimmung der abgefüllten Menge des Füllgutes mit hoher Genauigkeit bei zugleich hoher Produktionsgeschwindigkeit ermöglicht.

Diese Aufgabe wird durch eine Kapselfüllmaschine mit den Merkmalen des Anspruchs 1 gelöst.

Der Erfindung liegt eine weitere Aufgabe zugrunde, ein Verfahren zur Befüllung von Kapseln anzugeben, das eine Bestimmung der abgefüllten Menge des Füllgutes mit hoher Genauigkeit bei zugleich hoher Produktionsgeschwindigkeit ermöglicht.

Diese Aufgabe wird durch ein Verfahren mit den Merkmalen des Anspruchs 9 gelöst.

Der Erfindung liegt die Erkenntnis zugrunde, dass das gemessene Füllgut, dass durch den Messkanal in das Kapselunterteil fällt, nicht zwingend vollständig in der geschlossenen Kapsel vorliegen muss. Die Differenz aus gemessenem Füllgut und tatsächlich in der Kapsel enthaltenem Füllgut kann beispielsweise auf das Befüllen oder das Verschließen der Kapseln zurückgeführt werden. Es hat sich herausgestellt, dass beispielsweise kleinste Füllgutmengen nach Austreten aus dem Messkanal auch neben das Kapselunterteil fallen können. Wird das befüllte Kapselunterteil in das Kapseloberteil geführt, um diese miteinander zu verschließen, können ebenfalls Füllgutmengen verschüttet werden. Um die oben beschriebenen Nachteile zu vermeiden, sollte die Messung des Füllgutes erst nach dem Verschließen der Kapsel erfolgen.

Die erfindungsgemäße Kapselfüllmaschine dient zur Befüllung zweiteiliger Kapseln mit je einem Kapseloberteil und je einem Kapselunterteil. Die Kapselfüllmaschine umfasst eine Einsetzstation zur Zuführung unbefüllter Kapseln in die Kapselaufnahme mindestens eines Kapselsegments. Das Kapselsegment ist zur Beförderung der Kapseln vorgesehen. Das Kapselsegment umfasst ein Segmentunterteil zur Aufnahme des Kapselunterteils und ein Segmentoberteil zur Aufnahme des Kapseloberteils. Die Kapselfüllmaschine umfasst eine Dosierstation zur Befüllung eines Kapselunterteils mit Füllgut und eine Schließstation zum Schließen des befüllten Kapselunterteils und des Kapseloberteils. Zudem umfasst die Kapselfüllmaschine eine Messvorrichtung, wobei die Messvorrichtung ein kapazitives Messsystem umfasst. Die Messvorrichtung ist der Schließstation nachgelagert. Das kapazitive Messsystem umfasst eine Messstrecke. Entlang der Messstrecke kann mittels des kapazitiven Messsystems die Masse der befüllten, verschlossenen Kapsel gemessen werden. Die Messvorrichtung umfasst eine Führungsvorrichtung für die verschlossene Kapsel. Die Führungsvorrichtung ist zur Beförderung der befüllten, verschlossenen Kapsel von dem Kapselsegment zur Messstrecke des kapazitiven Messsystems ausgelegt.

Demnach wird zur Befüllung zweiteiliger Kapseln eine unbefüllte Kapsel einer Kapselaufnahme mindestens eines Kapselsegmentes zugeführt. Die Zuführung der unbefüllten Kapsel erfolgt an einer Einsetzstation der Kapselfüllmaschine. Anschließend werden Kapseloberteil und Kapselunterteil voneinander getrennt. Das Kapselunterteil und das Kapseloberteil werden in einer Schließstation verschlossen. Die befüllte Kapsel wird mittels einer Führungsvorrichtung zu einer Messstrecke eines kapazitiven Messsystems befördert. Dort wird die Masse der befüllten Kapsel mittels des kapazitiven Messsystems gemessen.

Die Kapseln werden üblicherweise der Kapselfüllmaschine in einem vorverschlossenen Zustand zugeführt. Im sogenannten Vorverschluss ist das Kapselunterteil nur geringfügig in das Kapseloberteil eingesteckt, so dass die Kapselhälften auf einfache Weise in der Trennstation voneinander getrennt werden können. Ist das Kapselunterteil befüllt, werden die Kapselhälften üblicherweise über eine Verrastung vollständig verschlossen. Im Sinne der Erfindung ist eine Kapsel bereits dann verschlossen, wenn sich das Kapselunterteil und das Kapseloberteil überdecken, wodurch das Füllgut nicht mehr aus der Kapsel austreten kann. Demnach sind unter einem geschlossenem Zustand der Kapsel sowohl ein vorverschlossener als auch ein endgültig verschlossener Zustand der Kapsel zu verstehen.

Durch diese Ausgestaltung der Kapselfüllmaschine wird die Masse der Kapsel in mit Füllgut befülltem und geschlossenem Zustand gemessen. Demnach wird die Bruttomasse der Kapsel gemessen. Zur Ermittlung der Nettomasse der Kapsel, also der Masse des Füllgutes, ist die Taramasse der Kapsel von der Bruttomasse der Kapsel abzuziehen. Die Taramasse der Kapsel wird üblicherweise vom Kapselhersteller angegeben. Da die Messung der Gesamtmasse erst nach dem Verschließen der Kapsel erfolgt, können Abweichungen der Masse des gemessenen und des in der verschlossenen Kapsel befindlichen Füllgutes ausgeschlossen werden. Eine hohe Genauigkeit der Bestimmung der Masse des in der Kapsel befindlichen Füllgutes kann somit erzielt werden.

Vorzugsweise ist ein weiteres, kapazitives Messsystem zur Messung der Masse unbefüllter Kapseln vorgesehen. Mittels des weiteren, kapazitiven Messsystems kann die Masse der unbefüllten Kapsel gemessen werden. Demnach muss das weitere kapazitive Messsystem zumindest der Dosierstation vorgelagert sein. Vorteilhaft wird die Masse der unbefüllten Kapsel noch vor Trennung von Kapseloberteil und Kapselunterteil gemessen. In einer bevorzugten Ausführung ist das weitere kapazitive Messsystem der Einsetzstation vorgelagert. Demnach wird die Masse der unbefüllten Kapsel mittels des weiteren, kapazitiven Messsystems gemessen, noch bevor die Kapsel erstmalig in das Kapselsegment eingesetzt wird. Bevorzugt wir die Masse des Füllgutes aus der Differenz der gemessenen Masse der befüllten Kapsel und der gemessenen Masse der unbefüllten Kapsel mittels einer Steuerung der Kapselfüllmaschine bestimmt. Hierbei handelt es sich um eine sogenannte Brutto-Tara-Messung. Sowohl die Bruttomasse als auch die Taramasse der Kapsel werden gemessen. Die Nettomasse wird aus der Differenz von Bruttomasse und Taramasse ermittelt. Die tatsächliche Taramasse der Kapsel kann von den Herstellerangaben abweichen. Derartige Abweichungen führen insbesondere bei der Abfüllung von Kleinstmengen kritischer, pharmazeutischer Stoffe zu ungewünschten Ungenauigkeiten bei der Ermittlung der Nettomasse einer Kapsel. Durch das Messen der unbefüllten Kapsel wird unabhängig von den Herstellerangaben einer Kapsel die Masse der Leerkapsel präzise bestimmt. Mittels dieser Brutto-Tara-Messung kann die Nettomasse der Kapsel präzise ermittelt werden.

Es ist vorteilhaft vorgesehen, dass die Kapselfüllmaschine mehrere Bearbeitungsbahnen aufweist, wobei das kapazitive Messsystem für jede Bearbeitungsbahn eine separate Messstrecke umfasst. Dadurch kann eine spurbezogene Messung der Masse der Kapseln erfolgen. Die spurbezogene Messung lässt Rückschlüsse der vorangegangenen Bearbeitung der Kapsel auf der entsprechenden Bearbeitungsbahn zu. Wird auf einer Bearbeitungsbahn eine von der Soll-Masse abweichende Masse des Füllgutes ermittelt, kann entlang dieser Bearbeitungsbahn eine Prüfung der einzelnen Stationen auf Richtigkeit erfolgen, ohne dabei sämtliche Stationen anderer Bearbeitungsbahnen überprüfen zu müssen. Fehlerursachen in der Prozesskette können deutlich schneller erkannt werden.

Vorzugsweise weist die Führungsvorrichtung eine Hebeeinheit auf, wobei die Hebeeinheit zum Ausheben der befüllten Kapsel aus dem Kapselsegment und zum Positionieren der befüllten Kapsel in der Messstrecke des kapazitiven Messsystems ausgelegt ist. Durch diese Ausgestaltung der Führungsvorrichtung bildet die Messvorrichtung ein Modul, das grundsätzlich flexibel in der Kapselfüllmaschine positioniert werden kann. So kann die Führungsvorrichtung beispielsweise an einer der auf die Schließstation folgenden Bearbeitungsstationen angeordnet werden. Vorzugsweise ist die Messeinrichtung zwischen der Schließstation und der Auswurfstation angeordnet. Die Hebeeinheit befördert die Kapsel in die Messstrecke, wobei die Kapsel in der Messstrecke vorzugsweise gehalten ist. Die Messung der Kapsel erfolgt bevorzugt statisch, demnach die Kapsel sich während der Messung mittels des kapazitiven Messsystems nicht, oder zumindest kaum bewegt. Durch die statische Messung können sehr gute Messergebnisse mit hoher Messgenauigkeit erzielt werden.

In einer alternativen Ausführung der Führungsvorrichtung weist die Führungsvorrichtung eine Führungsbahn auf, wobei die Führungsbahn in die Messstrecke des kapazitiven Messsystems mündet. Während die Kapsel entlang der Führungsbahn durch die Messstrecke hindurchgleitet, erfolgt die Messung der Masse der befüllten Kapsel. Demnach erfolgt die Messung dynamisch. Änderungen der Geschwindigkeit sowie der Lage der Kapsel beim Messen beeinflussen die Messgenauigkeit erheblich. Demnach liegt die Schwierigkeit dynamischer Messungen darin, eine möglichst gleichbleibende Geschwindigkeit der Kapsel sowie einen möglichst konstanten Abstand zwischen Kapsel und kapazitivem Sensor einzustellen. Hierfür ist die Messstrecke vorzugsweise schräg zur Richtung der Schwerkraft ausgerichtet. Die mit der Schwerkraft beaufschlagte Kapsel liegt auf der Messstrecke und gleitet diese herab. Aufgrund der Schrägstellung der Messstrecke ist die Kapsel an der Messstrecke geführt und weist dadurch einen nahezu konstanten Abstand zum kapazitiven Sensor des Messsystems auf. Auch die Geschwindigkeit der Kapsel beim Messen kann durch die Schrägstellung der Messstrecke nahezu konstant gehalten werden. Somit kann eine hohe Messgenauigkeit bei der Messung der Kapselmasse und zu gleich ein hoher Kapselausstoß erzielt werden. Eine derartige Messvorrichtung ist vorzugsweise nach der Auswurfstation angeordnet.

Ein Ausführungsbeispiel der Erfindung ist nachfolgend anhand der Zeichnung näher beschrieben. Es zeigen:
- Fig. 1: in einer Draufsicht eine Kapselfüllmaschine in erfindungsgemäßer Ausgestaltung mit Messvorrichtung,
- Fig. 2: in einer schematischen Seitendarstellung die Messvorrichtung, die Führungsvorrichtung und ein Kapselsegment, und
- Fig. 3: in einer schematischen Seitendarstellung eine alternative Ausführung der Führungsvorrichtung.

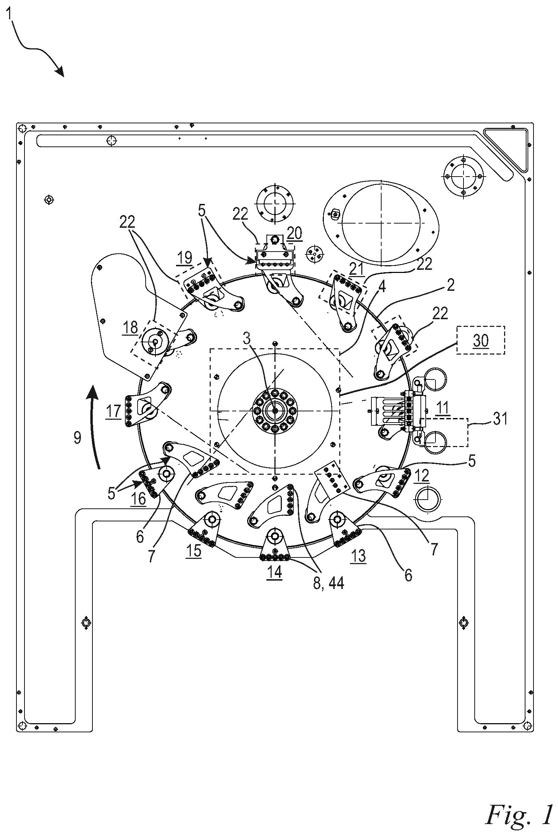

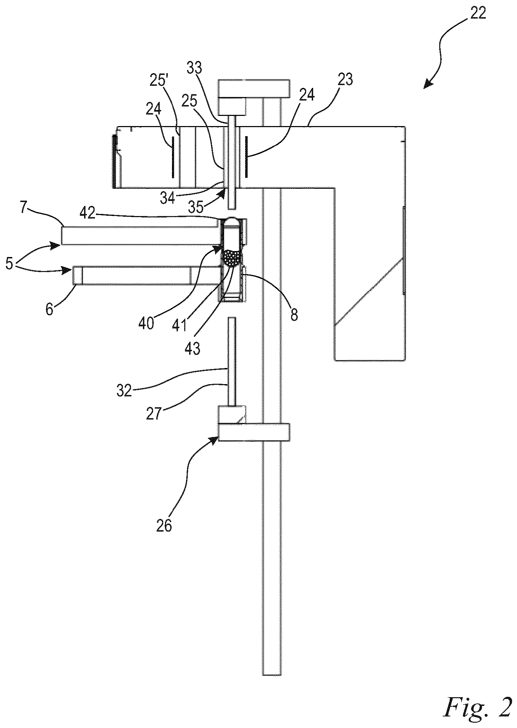

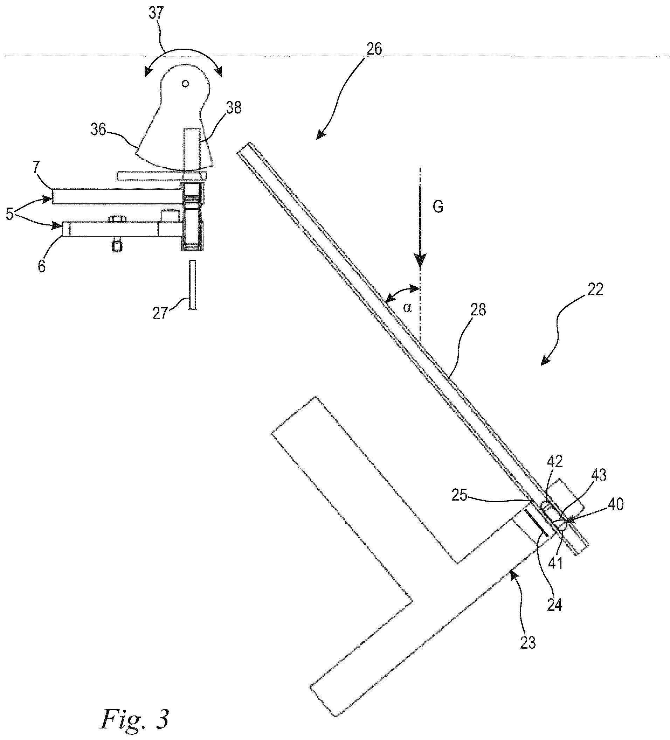

Fig. 1 zeigt in einer Draufsicht eine Ausführung einer erfindungsgemäßen Kapselfüllmaschine 1 zum Befüllen von Kapseln 40 mit einem Füllgut 43 (siehe auch Figuren 2 und 3). Das Füllgut 43 kann in Form eines Pulvers, eines Granulats, Tabletten, Flüssigkeiten oder dgl. bereitgestellt sein. Dabei kann es sich um ein pharmazeutisches Präparat, ein Nahrungsergänzungsmittel oder dergleichen handeln. Die Kapseln 40 bestehen aus einem Kapselunterteil 41 und einem darauf aufgesteckten Kapseloberteil 42, die beide beispielsweise aus Hartgelatine hergestellt sind.

Die Kapselfüllmaschine 1 nach Fig. 1 umfasst einen Drehtisch 2 und eine schematisch dargestellte Hauptantriebseinheit 4, wobei der Drehtisch 2 mittels der Hauptantriebseinheit 4 drehend um eine vertikale Drehachse 3 entsprechend der Drehrichtung 9 in getakteten Schritten antreibbar ist. Die Hauptantriebseinheit 4 umfasst mindestens einen Elektromotor, der mit dem Drehtisch 2 wirkverbunden ist und diesen antreibt. Vorzugsweise umfasst die Kapselfüllmaschine 1 eine Steuerung 30, die mit der Hauptantriebseinheit gekoppelt ist. Auch die Steuerung 30 ist in Fig. 1 lediglich schematisch strichliert dargestellt. Auf einem Umfangsbereich des Drehtisches 2 ist in gleichmäßigen Winkelabständen eine Anzahl von Kapselsegmenten 5 angeordnet. Im gezeigten Ausführungsbeispiel sind insgesamt zwölf Kapselsegmente 5 vorgesehen. Auch eine andere Anzahl an Kapselsegmenten 5 kann zweckmäßig sein. Jedes Kapselsegment 5 besteht aus je einem vorzugsweise fest am Umfangsbereich des Drehtisches 2 befestigten Segmentunterteils 6 sowie einem relativ dazu verschwenkbaren Segmentoberteil 7. Um den Drehtisch 2 herum sind mehrere feststehende, also nicht mit dem Drehtisch 2 mitdrehende Bearbeitungsstationen 11 bis 22 positioniert, die in Fig. 1 nicht im Detail dargestellt sind. Die Anzahl der Bearbeitungsstationen 11 bis 22 entspricht vorzugsweise der Anzahl der Kapselsegmente 5, so dass in jeder in Winkelschritten getakteten Drehposition des Drehtisches 2 jedes Kapselsegment 5 im Zugriffsbereich je einer der Bearbeitungsstationen 11 bis 22 zu liegen kommt.

Im bevorzugten Ausführungsbeispiel enthalten die Kapselsegmente 5 mehrere Kapselaufnahmen 8 zur Aufnahme der Kapseln. Im bevorzugten Ausführungsbeispiel enthält jedes Kapselsegment 5 fünf Kapselaufnahmen 8. Es kann zweckmäßig sein, auch mehrere Kapselaufnahmen 8, insbesondere zehn, vorzugsweise zwölf Kapselaufnahmen 8 vorzusehen. Die Kapselaufnahmen 5 sind im bevorzugten Ausführungsbeispiel in einer linearen, geradlinigen Reihe angeordnet. Bei einer hohen Anzahl an Kapselaufnahmen 5 können diese auch in zwei oder mehreren solcher Reihen angeordnet sein.

Das bevorzugte Ausführungsbeispiel der Kapselfüllmaschine 1 umfasst eine Einsetzstation 11, in der zunächst provisorisch zusammengesteckte, aus Kapselunterteil 41 und Kapseloberteil 42 bestehende Leerkapseln in die Kapselaufnahmen 8 des Kapselsegmentes 5 eingesetzt werden. Im gewöhnlichen Betrieb erfolgt eine Trennung des aufgesteckten Kapseloberteils 42 vom Kapselunterteil 41. Die nächste Bearbeitungsstation ist eine Ausscheidestation 12. Fehlerhafte, nicht getrennte Leerkapseln werden in der Ausscheidestation 12 ausgeschieden.

Nach der Ausscheidestation 12 wird das Segmentoberteil 7 mit den darin gehaltenen Kapseloberteilen 42 gegenüber dem Segmentunterteil 6 mit den darin gehaltenen Kapselunterteilen 41 verschwenkt. Das Segmentunterteil 6 wird an die auf die Ausscheidestation 12 folgenden, hier insgesamt drei Dosierstationen 13, 14, 15 geführt. In den Dosierstationen 13, 14, 15 werden die in den Segmentunterteilen 6 gehaltenen Kapselunterteile mit dem vorgesehenen Füllgut 43 befüllt. Es kann auch ausreichend sein, nur eine oder zwei Dosierstationen vorzusehen.

Nach dem Durchlaufen der letzten Dosierstation 15 erfolgt über die Stationen 16, 17, 18 ein Einschwenken des Segmentoberteils 7 zurück in die fluchtende Lage relativ zum Segmentunterteil 6. In der Schließstation 18 werden die Kapseln 40 vorzugsweise verschlossen, indem die zuvor abgezogenen bzw. getrennten Kapseloberteile 42 zurück auf die befüllten Kapselunterteile 41 geschoben werden. Vorzugsweise werden die Kapselhälften 41, 42 miteinander verrastet. An die Schließstation 18 schließen sich mehrere Kontrollstationen 19, 20, an. In den Kontrollstationen 19, 20 werden Kapseln 40 geprüft und gegebenenfalls aussortiert. In einer nachfolgenden Auswurfstation 21 werden die verbleibenden und für gut befundenen Kapseln 8 mittels nicht dargestellter Stößel oder anderer Auswurfmittel ausgestoßen. Auch in der Auswurfstation 21 können noch Prüfungen der Kapseln 8 vorgenommen werden.

Wie in Fig. 1 gezeigt, umfasst die Kapselfüllmaschine 1 eine Messvorrichtung 22. Die Messvorrichtung 22 ist lediglich strichliert in Form eines Viereckes schematisch dargestellt. Die Messvorrichtung 22 dient zur Messung der Masse einer Kapsel 40. Die Messvorrichtung 22 ist der Schließstation 18 nachgelagert. Wie in Fig. 1 angedeutet, kann die Messvorrichtung 22 prozessual zwischen der Schließstation 18 bis hin zu nach der Auswurfstation 21 angeordnet sein. Demnach werden in der Messvorrichtung 22 lediglich geschlossene Kapseln 40 gemessen. Selbstverständlich kann es auch zweckmäßig sein, mehrere Messvorrichtungen 22 in einer Kapselfüllmaschine 1 vorzusehen. An dieser Stelle sei darauf hingewiesen, dass die Begriffe "vorgelagert" und "nachgelagert" prozessual in Bezug auf die Bearbeitung der Kapseln 40 zu verstehen sind. Ist also eine erste Vorrichtung der zweiten Vorrichtung vorgelagert, so durchlaufen die Kapseln 40 in der Kapselfüllmaschine 1 zuerst die erste Vorrichtung und danach die zweite Vorrichtung.

Wie in den Figuren 2 und 3 gezeigt, umfasst die Messvorrichtung 22 ein kapazitives Messsystem 23 und eine Führungsvorrichtung 26. Das kapazitive Messsystem 23 umfasst mindestens eine Messstrecke 25. Ferner umfasst das kapazitive Messsystem 23 ein an der Messstrecke 25 angeordneten kapazitiven Sensor 24. Der kapazitive Sensor 24 erzeugt ein elektrisches Feld, das sich zumindest teilweise über die Messstrecke 25 erstreckt. Wird eine Kapsel 40 in die Messstrecke 25 geführt, bewirkt diese eine Änderung des elektrischen Feldes, wodurch die Masse der Kapsel 40 berechnet wird. Wie in Fig. 2 gezeigt, umfasst das kapazitive Messsystem 23 in einer besonders bevorzugten Ausführung der Kapselfüllmaschine 1 eine Referenzmessstrecke 25', um die Dielektrizität der Umgebung zu ermitteln. Somit kann eine noch genauere Bestimmung der Masse der Kapsel 40 in der Messstrecke erfolgen.

Die Führungsvorrichtung 26 der Messvorrichtung 22 ist zur Beförderung der Kapsel 40 von dem Kapselsegment 5 zur Messstrecke 25 des kapazitiven Messsystems 23 ausgelegt. Die Fig. 2 zeigt ein Ausführungsbeispiel der Messvorrichtung 22, in welcher die Führungsvorrichtung 26 eine Hebeeinheit 27 aufweist. Die Hebeeinheit 27 umfasst einen dem Segmentunterteil 6 zugeordneten, unteren Schieber 32 und einem dem Segmentoberteil 7 zugeordneten, oberen Schieber 33. Nach dem Verschließen von Kapseloberteil 42 und Kapselunterteil 41, wird die gesamte, befüllte Kapsel 40 durch den unteren Schieber 32 aus dem Kapselsegment 5 gehoben und in die Messstrecke 25 des kapazitiven Messsystems 23 geschoben. Die Messstrecke 25 ist als ein Messkanal 34 ausgebildet, wobei der Messkanal 34 an seinem dem Kapselsegment 5 zugewandten Ende eine Kanalöffnung 35 aufweist. Über die Kanalöffnung 35 ist die Kapsel 40 in den Messkanal 34 einschiebbar. Der Messkanal 34 und die Kapselaufnahme 8 sind bei der Überführung der Kapsel 40 durch die Hebeeinheit 27 in etwa koaxial zueinander ausgebildet. Die Hebeeinheit 27 kann in bevorzugter Ausführung auch Teil der Schließstation 18 sein.

Ist die Kapsel 40 in der Messstrecke 25 positioniert, wird diese bevorzugt durch den unteren Schieber 32 und/oder den oberen Schieber 33 fixiert. Die Masse der geschlossenen und befüllten Kapsel 40 wird mittels des kapazitiven Messsystems 23 in dem Messkanal 34 gemessen. Nach Beendigung des Messvorgangs wird die Kapsel 40 mittels der Hebeeinheit 27 zurück in die Kapselaufnahme 8 des Kapselsegmentes 5 gesetzt. Dadurch, dass nicht nur das Füllgut 43 beim Einfüllen in die Kapsel 40, sondern die gesamte Kapsel 40 mit Füllgut 43 in geschlossenem Zustand gemessen wird, ist der kapazitive Messvorgang unabhängig von dem abzufüllenden Füllgut 43. Demnach kann auch flüssiges Füllgut oder ähnliches gemessen werden. Anschließend kann die Kapsel 40 die weiteren Bearbeitungsstationen durchlaufen.

In alternativer Ausgestaltung der Kapselfüllmaschine 1 kann die Hebeeinheit 27 anstelle der Schieber 32, 33 auch andere Mittel zum Ausheben der Kapsel 40 aus dem Kapselsegment 5 und/oder zum Halten der Kapsel 40 in der Messstrecke 25 aufweisen. Derartige Mittel können beispielsweise auch Druckluft, Unterdruck oder auch andere mechanische Elemente sein.

Eine alternative Ausgestaltung der Messeinrichtung 22 ist in Fig. 3 gezeigt. Die Führungsvorrichtung 26 umfasst ebenfalls eine Hebeeinheit 27. Die Hebeeinheit umfasst vorzugsweise einen Schieber zum Ausheben der Kapsel 40 auf dem Kapselsegment 5. Es kann auch zweckmäßig sein, ein anderes Mittel zum Ausheben der Kapsel 40 vorzusehen. Ferner umfasst die Führungsvorrichtung 26 einen Schwenkarm 36 mit einem Kapselhalter 38. Zudem umfasst die Führungsvorrichtung 26 eine Führungsbahn 28, wobei bevorzugt ein Abschnitt der Führungsbahn 28 als Messstrecke 25 ausgebildet ist. Die Kapsel 40 wird über die Hebeeinheit 27 aus dem Kapselsegment 5 gehoben und in den Kapselhalter 38 des Schwenkarms 36 geschoben. Befindet sich die Kapsel 40 in dem Kapselhalter 38, wird diese in dem Kapselhalter 38 über nicht näher dargestellte Haltemittel festgehalten. Ein solches Haltemittel könnte beispielsweise ein an dem Kapselhalter 38 anliegender Unterdruck sein. Anschließend schwenkt der Schwenkarm 36 in eine Schwenkrichtung 37 in Richtung zur Führungsbahn 28. Ist der Kapselhalter 38 in etwa koaxial zur Führungsbahn 26 ausgerichtet, wird die Kapsel 40 freigegeben und rutscht unter Wirkung der Schwerkraft auf die Führungsbahn 26. Die Führungsbahn 26 ist vorliegend als ein Führungskanal ausgebildet. Es kann jedoch auch zweckmäßig sein, die Führungsbahn 26 offen zu gestalten, beispielsweise in Form einer Rinne. Die Kapsel 40 rutscht die Führungsbahn 26 herunter und durchquert die Messstrecke 25. An der Messstrecke 25 ist der kapazitive Sensor 24 des kapazitiven Messsystems 23 angeordnet, der das elektrische Feld generiert. Die Kapsel 40 durchquert das elektrische Feld des kapazitiven Messsystems 23. Die Masse der befüllten Kapsel 40 wird gemessen. Das Messen erfolgt während die Kapsel 40 durch die Messstrecke 25 hindurchgleitet, demnach eine dynamische Messung vorliegt.

Wie in Fig. 3 gezeigt, ist die Führungsbahn 28 schräg verlaufend zur Schwerkraftrichtung G ausgebildet. Die Führungsbahn 28, insbesondere deren Längsachse, schließt mit der Schwerkraftrichtung G einen Winkel α ein, wobei der Winkel α in einem Bereich von 5° bis 50°, insbesondere von 25° bis 45° liegt. Der Winkel α liegt bevorzugt bei in etwa 40°. Gegenüber einem Fallschacht ergeben sich dadurch zwei wesentliche Vorteile, die eine erhöhte Messgenauigkeit zulassen. Zum einen ist die Geschwindigkeit, mit der die Kapsel 40 die Messstrecke 25 durchquert, reduziert und näherungsweise konstant. Zum anderen liegt die Kapsel 40 permanent an der Führungsbahn 28 auf und hat damit eine feste Bewegungsbahn. Somit durchquert die Kapsel 40 die Messstrecke 25 näherungsweise immer mit derselben Geschwindigkeit und derselben Lage. Wie bereits anfangs erwähnt, erhöht sich dadurch die Messgenauigkeit.

Die Ausführung der Messvorrichtung 22 mit einer Führungsvorrichtung 26 gemäß Figur 3 ist vorzugsweise nach der Auswurfstation 21 vorgesehen. Somit kann die Führungsvorrichtung 26 sogar Teil der Auswurfvorrichtung 26 sein.

Die Kapselfüllmaschine 1 umfasst mehrere Bearbeitungsbahnen 44, entlang derer mehrere Kapseln 40 befüllt werden können. Wie bereits oben ausgeführt, sind in dem vorliegenden Ausführungsbeispiel der Kapselfüllmaschine 1 nach Fig. 1 fünf Kapselaufnahmen 8, und damit auch fünf Bearbeitungsbahnen 44 vorgesehen. Für jede Bearbeitungsbahn 44 ist vorzugsweise eine Messstrecke 25 des kapazitiven Messsystems 22 vorgesehen, demnach auch eine spurbezogene Messung der Masse der Kapseln 40 erfolgen kann. Wird auf einer Bearbeitungsbahn 44 eine von der Soll-Masse abweichende Masse des Füllgutes 43 ermittelt, kann entlang dieser Bearbeitungsbahn 44 eine Prüfung der einzelnen Stationen auf Richtigkeit erfolgen, ohne dabei sämtliche Stationen anderer Bearbeitungsbahnen 44 überprüfen zu müssen. Bei der Messvorrichtung 22 nach Fig. 3 kann es auch zweckmäßig sein, sofern diese nach der Auswurfstation 21 angeordnet ist oder zumindest ein Teil der Auswurfstation 21 ist, lediglich eine Messstrecke 25 vorzusehen. Die Kapseln 40 werden bevorzugt sequentiell auf die Führungsbahn 28 geführt, wobei die Reihenfolge der Kapseln 40 der verschiedenen Bearbeitungsbahnen 44 von der Steuerung 30 erfasst sind. Dadurch können die Messwerte des kapazitiven Messsystems 23 einer jeden Kapsel 40 der entsprechenden Bearbeitungsbahn 44 zugeordnet werden.

Zur Ermittlung der Nettomasse der befüllten Kapsel 40, also der Masse des Füllgutes 43, ist die Taramasse der Kapsel 40 von der gemessenen Bruttomasse der Kapsel 40 abzuziehen. Die Taramasse der Kapseln 40 ist bekannt und in der Steuerung 30 hinterlegt. Die bekannte Taramasse der Leerkapseln stellt jedoch nur einen statistischen Mittelwert da, der entweder selbst über eine bestimmte Anzahl an Kapseln 40 bestimmt wird oder durch den Hersteller der Leerkapseln angegeben ist. Demnach können Abweichungen zwischen der Realmasse einer Leerkapsel und dem statistischen Mittelwert der Masse der Leerkapsel bestehen. Diese Abweichungen können insbesondere bei der Abfüllung von Kleinstmengen an Füllgut 43 einen erheblichen Einfluss auf die Gesamtmasse einer befüllten Kapsel 40 haben. Daher umfasst die Kapselfüllmaschine 1 in besonders bevorzugter Ausführung ein weiteres kapazitives Messsystem 31, das zur Messung der Masse der Leerkapseln 40 dient. Das weitere kapazitive Messsystem 31 ist integraler Bestandteil der Kapselfüllmaschine 1. Das weitere kapazitive Messsystem 31 ist vorzugsweise vor der Einsetzstation 11 der Kapselfüllmaschine 1 angeordnet, wie in Fig. 1 durch ein strichliertes Rechteck schematisch angedeutet. Alternativ kann das weitere kapazitive Messsystem 31 auch Teil der Einsetzstation 31 sein. Technisch ist das weitere kapazitive Messsystem 31 analog dem kapazitiven Messsystem 23 aufgebaut. Noch bevor die leere Kapsel 40 in Kapselunterteil 6 und Kapseloberteil 7 getrennt wird, wird diese in die Messstrecke geführt und dort deren Masse gemessen. Das Messergebnis wird in der Steuerung 30 hinterlegt. Nachdem dieselbe Kapsel 40 befüllt und deren Bruttomasse gemessen wurde, wird über die Steuerung 30 die Nettomasse bestimmt. Hierfür wird von der Bruttomasse die zuvor gemessene Taramasse der Kapsel 40 abgezogen. Das Messergebnis weist somit eine äußerst hohe Genauigkeit auf, wodurch auch die Massen von Kleinstfüllgutmengen mit höchster Präzision bestimmt werden können.

## Patentansprüche

1. Kapselfüllmaschine zur Befüllung zweiteiliger Kapseln mit je einem Kapseloberteil und je einem Kapselunterteil,
umfassend eine Einsetzstation (11) zur Zuführung unbefüllter Kapseln (40) in die Kapselaufnahmen (8) mindestens eines Kapse segments (5), wobei das Kapselsegment (5) zur Beförderung der Kapseln (40) vorgesehen ist, wobei das Kapselsegment (5) ein Segmentunterteil (6) zur Aufnahme des Kapselunterteils (41) und ein Segmentoberteil (7) zur Aufnahme des Kapseloberteils (42) umfasst,
und eine Dosierstation (13, 14, 15) zur Befüllung eines Kapselunterteils (41) mit Füllgut (43), eine Schließstation (18) zum Schließen des befüllten Kapselunterteils (41) und des Kapseloberteils (42), und eine Messvorrichtung (22), wobei die Messvorrichtung (22) ein kapazitives Messsystem (23) umfasst,
**dadurch gekennzeichnet, dass** die Messvorrichtung (22) der Schließstation (18) nachgelagert ist, dass das kapazitive Messsystem (23) eine Messstrecke (25) umfasst, entlang derer mittels des kapazitiven Messsystems (23) die Masse der befüllten, verschlossenen Kapsel (40) gemessen werden kann, und wobei das kapazitive Messsystem (23) einen an der Messstrecke (25) angeordneten kapazitiven Sensor (24) umfasst, und dass die Messvorrichtung (22) eine
Führungsvorrichtung (26) für die verschlossene Kapsel (40) umfasst, wobei die Führungsvorrichtung (26) zur Beförderung der befüllten, verschlossenen Kapsel (40) von dem Kapselsegment (5) zur Messstrecke (25) des kapazitiven Messsystems (23) ausgelegt ist,
und dass die Kapselfüllmaschine (1) mehrere Bearbeitungsbahnen (44) aufweist,
wobei das kapazitive Messsystem (23) für jede Bearbeitungsbahn (44) eine separate Messstrecke (25) umfasst.

2. Kapselfüllmaschine nach Anspruch 1,
**dadurch gekennzeichnet, dass** ein weiteres, kapazitives Messsystem (31) zur Messung der Masse unbefüllter Kapseln (40) vorgesehen ist.

3. Kapselfüllmaschine nach Anspruch 2,
**dadurch gekennzeichnet, dass** das weitere, kapazitive Messsystem (31) der Einsetzstation (11) vorgelagert ist.

4. Kapselfüllmaschine nach einem der Ansprüche 1 bis 3,
**dadurch gekennzeichnet, dass** die Führungsvorrichtung (26) eine Hebeeinheit (27) aufweist, wobei die Hebeeinheit (27) zum Ausheben der befüllten Kapsel (40) aus dem Kapselsegment (5) und zum Positionieren der befüllten Kapsel (40) in der Messstrecke (25) des kapazitiven Messsystems (23) ausgelegt ist.

5. Kapselfüllmaschine nach Anspruch 4,
**dadurch gekennzeichnet, dass** die Messeinrichtung (22) zwischen der Schließstation (18) und der Auswurfstation (21) angeordnet ist.

6. Kapselfüllmaschine nach einem der Ansprüche 1 bis 4,
**dadurch gekennzeichnet, dass** die Führungsvorrichtung (26) eine Führungsbahn (28) aufweist, wobei die Führungsbahn (28) in der Messstrecke (25) des kapazitiven Messsystems (23) mündet.

7. Kapselfüllmaschine nach Anspruch 6,
**dadurch gekennzeichnet, dass** die Messstrecke (25) schräg zur Richtung der Schwerkraft (G) ausgerichtet ist.

8. Kapselfüllmaschine nach Anspruch 6 oder 7,
**dadurch gekennzeichnet, dass** die Messvorrichtung (22) nach der Auswurfstation (21) angeordnet ist.

9. Verfahren zur Befüllung zweiteiliger Kapseln mit je einem Kapseloberteil und je einem Kapselunterteil,
mit einer Kapselfüllmaschine (1), wobei die Kapselfüllmaschine (1) mehrere Bearbeitungsbahnen (44) aufweist, wobei ein kapazitive Messsystem (23) für jede Bearbeitungsbahn (44) eine separate Messstrecke (25) umfasst, und wobei das kapazitive Messsystem (23) einen an der Messstrecke (25) angeordneten kapazitiven Sensor (24) umfasst, umfassend die folgenden Schritte:
- Eine unbefüllte Kapsel (40) wird an einer Einsetzstation (11) der Kapselfüllmaschine (1) einer Kapselaufnahme (8) mindestens eines Kapselsegmentes (5) zugeführt,
- Kapseloberteil (7) und Kapselunterteil (6) werden voneinander getrennt,
- das Kapselunterteil (6) wird in einer Dosierstation (13, 14, 15) mit Füllgut (43) befüllt,
- das befüllte Kapselunterteil (6) und das Kapseloberteil (7) werden in einer Schließstation (18) verschlossen
- die befüllte Kapsel (40) wird mittels einer Führungsvorrichtung (26) zu einer Messstrecke (25) des kapazitiven Messsystems (23) befördert,
- die Masse der befüllten Kapsel (40) wird in der Messtrecke (25) mittels des kapazitiven Messsystems (23) gemessen.

10. Verfahren nach Anspruch 9,
**dadurch gekennzeichnet, dass** die Masse der unbefüllten Kapsel (40) mittels eines weiteren kapazitiven Messsystems (31) gemessen wird.

11. Verfahren nach Anspruch 10,
**dadurch gekennzeichnet, dass** die Masse des Füllgutes (43) aus der Differenz der gemessenen Masse der befüllten Kapsel (40) und der gemessenen Masse der unbefüllten Kapsel (40) mittels einer Steuerung (30) der Kapselfüllmaschine (1) bestimmt wird.

## Claims

1. Capsule filling machine for filling two-piece capsules that each comprise a capsule upper part and a capsule lower part,
comprising an insertion station (11) for delivering unfilled capsules (40) into the capsule receivers (8) of at least one capsule segment (5), the capsule segment (5) being designed to convey the capsules (40), the capsule segment (5) comprising a segment lower part (6) for receiving the capsule lower part (41), and a segment upper part (7) for receiving the capsule upper part (42), and a dosing station (13, 14, 15) for filling a capsule lower part (41) with fill product (43), a closing station (18) for closing the filled capsule lower part (41) and the capsule upper part (42), and a measuring device (22), the measuring device (22) comprising a capacitive measuring system (23),
**characterized in that** the measuring device (22) is downstream of the closing station (18), **in that** the capacitive measuring system (23) comprises a measuring section (25), along which the mass of the filled, closed capsule (40) can be measured by means of the capacitive measuring system (23), and the capacitive measuring system (23) comprising a capacitive sensor (24) arranged at the measuring section (25), and **in that** the measuring device (22) comprises a guide device (26) for the closed capsule (40), the guide device (26) being designed to convey the filled, closed capsule (40) from the capsule segment (5) to the measuring section (25) of the capacitive measuring system (23),
and **in that** the capsule filling machine (1) has a plurality of processing tracks (44), the capacitive measuring system (23) comprising a separate measuring section (25) for each processing track (44).

2. Capsule filling machine according to Claim 1,
**characterized in that** a further capacitive measuring system (31) is provided, for measuring the mass of unfilled capsules (40).

3. Capsule filling machine according to Claim 2,
**characterized in that** the further capacitive measuring system (31) is upstream of the insertion station (11).

4. Capsule filling machine according to one of Claims 1 to 3,
**characterized in that** the guide device (26) has a lifting unit (27), the lifting unit (27) being designed to lift the filled capsule (40) out of the capsule segment (5) and to position the filled capsule (40) in the measuring section (25) of the capacitive measuring system (23).

5. Capsule filling machine according to Claim 4,
**characterized in that** the measuring equipment (22) is arranged between the closing station (18) and the ejection station (21).

6. Capsule filling machine according to one of Claims 1 to 4,
**characterized in that** the guide device (26) has a guideway (28), the guideway (28) leading into the measuring section (25) of the capacitive measuring system (23).

7. Capsule filling machine according to Claim 6,
**characterized in that** the measuring section (25) is inclined with respect to the direction of gravity (G).

8. Capsule filling machine according to Claim 6 or 7,
**characterized in that** the measuring device (22) is arranged downstream of the ejection station (21).

9. Method for filling two-piece capsules that each comprise a capsule upper part and a capsule lower part,
by means of a capsule filling machine (1), the capsule filling machine (1) having a plurality of processing tracks (44), a capacitive measuring system (23) comprising a separate measuring section (25) for each processing track (44), and the capacitive measuring system (23) comprising a capacitive sensor (24) arranged at the measuring section (25), comprising the following steps:
- An unfilled capsule (40) is delivered, at an insertion station (11) of the capsule filling machine (1), to a capsule receiver (8) of at least one capsule segment (5),
- the capsule upper part (7) and the capsule lower part (6) are separated from each other,
- in a dosing station (13, 14, 15) the capsule lower part (6) is filled with fill product (43),
- the filled capsule lower part (6) and the capsule upper part (7) are closed in a closing station (18),
- the filled capsule (40) is conveyed by means of a guide device (26) to a measuring section (25) of the capacitive measuring system (23),
- the mass of the filled capsule (40) is measured in the measuring section (25) by means of the capacitive measuring system (23).

10. Method according to Claim 9,
**characterized in that** the mass of the unfilled capsule (40) is measured by means of a further capacitive measuring system (31).

11. Method according to Claim 10,
**characterized in that** the mass of the fill product (43) is determined, by means of a control system (30) of the capsule filling machine (1), from the difference of the measured mass of the filled capsule (40) and the measured mass of the unfilled capsule (40).

## Revendications

1. Machine de remplissage de capsules destinée à remplir des capsules en deux parties avec chacune une partie supérieure de capsule et une partie inférieure de capsule, comprenant un poste d'insertion (11) pour introduire des capsules (40) non remplies dans les logements de capsules (8) d'au moins un segment (5) de capsule, le segment (5) de capsule étant prévu pour transporter les capsules (40), le segment (5) de capsule comprenant une partie inférieure (6) de segment pour recevoir la partie inférieure (41) de capsule et une partie supérieure (7) de segment pour recevoir la partie supérieure (42) de capsule, et un poste de dosage (13, 14, 15) pour remplir une partie inférieure (41) de capsule avec un matériau de remplissage (43), un poste de fermeture (18) pour fermer la partie inférieure (41) de capsule remplie et la partie supérieure (42) de capsule, et un dispositif de mesure (22), le dispositif de mesure (22) comprenant un système de mesure capacitif (23),
**caractérisée en ce que** le dispositif de mesure (22) est disposé en aval du poste de fermeture (18), que le système de mesure capacitif (23) comprend une section de mesure (25) le long de laquelle la masse de la capsule (40) fermée remplie peut être mesurée au moyen du système de mesure capacitif (23), et le système de mesure capacitif (23) comprenant un capteur capacitif (24) disposé sur la section de mesure (25), et que le dispositif de mesure (22) comprend un dispositif de guidage (26) pour la capsule (40) fermée, le dispositif de guidage (26) étant conçu pour transporter la capsule (40) fermée remplie du segment (5) de capsule à la section de mesure (25) du système de mesure capacitif (23),
et que la machine de remplissage de capsules (1) comporte plusieurs voies de traitement (44), le système de mesure capacitif (23) comprenant une section de mesure (25) séparée pour chaque voie de traitement (44).

2. Machine de remplissage de capsules selon la revendication 1,
**caractérisée en ce qu'un** autre système de mesure capacitif (31) est prévu pour mesurer la masse de capsules (40) non remplies.

3. Machine de remplissage de capsules selon la revendication 2,
**caractérisée en ce que** l'autre système de mesure capacitif (31) est disposé en amont du poste d'insertion (11).

4. Machine de remplissage de capsules selon l'une des revendications 1 à 3,
**caractérisée en ce que** le dispositif de guidage (26) comporte une unité de levage (27), l'unité de levage (27) étant conçue pour soulever la capsule (40) remplie hors du segment (5) de capsule et pour positionner la capsule (40) remplie dans la section de mesure (25) du système de mesure capacitif (23).

5. Machine de remplissage de capsules selon la revendication 4,
**caractérisée en ce que** le système de mesure (22) est disposé entre le poste de fermeture (18) et le poste d'éjection (21).

6. Machine de remplissage de capsules selon l'une des revendications 1 à 4,
**caractérisée en ce que** le dispositif de guidage (26) comporte une voie de guidage (28), la voie de guidage (28) débouchant dans la section de mesure (25) du système de mesure capacitif (23).

7. Machine de remplissage de capsules selon la revendication 6,
**caractérisée en ce que** la section de mesure (25) est orientée obliquement par rapport à la direction de gravité (G).

8. Machine de remplissage de capsules selon la revendication 6 ou 7,
**caractérisée en ce que** le dispositif de mesure (22) est disposé en aval du poste d'éjection (21).

9. Procédé destiné à remplir des capsules en deux parties avec chacune une partie supérieure de capsule et une partie inférieure de capsule,
avec une machine de remplissage de capsules (1), la machine de remplissage de capsules (1) comportant plusieurs voies de traitement (44), un système de mesure capacitif (23) pour chaque voie de traitement (44) comprenant une section de mesure (25) séparée, et le système de mesure capacitif (23) comprenant un capteur capacitif (24) disposé sur la section de mesure (25), comprenant les étapes suivantes :
- une capsule (40) non remplie est amenée à un réceptacle de capsule (8) d'au moins un segment (5) de capsule sur un poste d'insertion (11) de la machine de remplissage de capsules (1),
- la partie supérieure (7) de capsule et la partie inférieure (6) de capsule sont séparées l'une de l'autre,
- la partie inférieure de capsule (6) est remplie de matière de remplissage (43) dans un poste de dosage (13, 14, 15),
- la partie inférieure (6) de capsule remplie et la partie supérieure (7) de capsule sont fermées dans un poste de fermeture (18),
- la capsule (40) remplie est transportée au moyen d'un dispositif de guidage (26) jusqu'à une section de mesure (25) du système de mesure capacitif (23),
- la masse de la capsule (40) remplie est mesurée dans la section de mesure (25) au moyen du système de mesure capacitif (23).

10. Procédé selon la revendication 9,
**caractérisé en ce que** la masse de la capsule (40) non remplie est mesurée au moyen d'un autre système de mesure capacitif (31).

11. Procédé selon la revendication 10,
**caractérisé en ce que** la masse du matériau de remplissage (43) est déterminée à partir de la différence entre la masse mesurée de la capsule (40) remplie et la masse mesurée de la capsule (40) non remplie au moyen d'une commande (30) de la machine de remplissage de capsules (1).
